(19) Europäisches Patentamt European Patent Office Office européen des brevets

(11) **EP 3 056 936 A1**

(12) **EUROPEAN PATENT APPLICATION**

(43) Date of publication:
**17.08.2016 Bulletin 2016/33**

(51) Int Cl.:
***G02B 26/08*** (2006.01)    ***G09G 3/00*** (2006.01)

(21) Application number: **16155111.4**

(22) Date of filing: **10.02.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **12.02.2015 JP 2015025221**

(71) Applicant: **Stanley Electric Co., Ltd.
Meguro-ku
Tokyo 153-8636 (JP)**

(72) Inventor: **SAITO, Takao
Tokyo 153-8636 (JP)**

(74) Representative: **Emde, Eric
Wagner & Geyer
Gewürzmühlstrasse 5
80538 München (DE)**

(54) **APPARATUS INCLUDING OPTICAL DEFLECTOR CONTROLLED BY SAW-TOOTH VOLTAGE AND ITS CONTROLLING METHOD**

(57)    An optical deflector (19) includes a mirror (191); a piezoelectric actuator (196a, 196b) adapted to rock the mirror (191) around an axis of the mirror (191); and a piezoelectric sensor (198a, 198b) adapted to sense vibrations of the piezoelectric actuator (196a, 196b). A control unit (23) includes: a saw-tooth voltage generating block (151) adapted to generate a saw-tooth voltage ($V_y$); an integral block (161) adapted to calculate an integral voltage ($V_{ys}$') of a sum of a sense voltage ($V_{ys}$) of the piezoelectric sensor (198a, 198b) and a DC offset characteristic voltage (C); a DC offset characteristic voltage calculating block (162) adapted to calculate the DC offset characteristic voltage (C) in accordance with the integral voltage ($V_{ys}$'); a subtracter block (152) adapted to generate a deviation (e(t)) between the saw-tooth voltage ($V_y$) and the integral voltage ($V_{ys}$') ; and a controller (153) adapted to generate a drive voltage ($V_{ya}$) in accordance with the deviation (e(t)) to apply the drive voltage ($V_{ya}$) to the piezoelectric actuator (196a, 196b).

**Description**

This application claims the priority benefit under 35 U.S.C. §119 to Japanese Patent Application No. JP2015-025221 filed on February 12, 2015, which disclosure is hereby incorporated in its entirety by reference.

BACKGROUND

Field

The presently disclosed subject matter relates to an apparatus including an optical deflector controlled by a saw-tooth voltage and its controlling method, and more specifically, to a video projection apparatus and its controlling method. The video projection apparatus can be used as a pico projector, a head mount display (HMD) unit, a head up display (HUD) unit and the like.

Description of the Related Art

A prior art video projection apparatus is constructed by a two-dimensional optical deflector as an optical scanner manufactured by a micro electro mechanical system (MEMS) device manufactured using a semiconductor process and micro machine technology (see: JP5543468B2 & US2010/0073748A1). Since the MEMS optical scanner is focus-free, the video projection apparatus can be small in size.

Generally, in the above-mentioned two-dimensional optical deflector, a mirror is rocked with respect to a horizontal deflection at a high frequency such as 18 kHz, while the mirror is rocked with respect to a vertical deflection at a low frequency such as 60 Hz (see: paragraph 0026 of US2010/0073748A1). Also, the mirror includes a sensor for sensing rocking vibrations thereof in the vertical deflection. As a result, the vertical deflection of the mirror is controlled by the feedback of a simple sum of the sense voltage of the sensor, thus accurately realizing the vertical deflection of the mirror (see: the summing buffer 760 of Fig. 7 and 8 of US2010/0073748A1). On the other hand, the above-mentioned sensor can be constructed by a piezoelectric element incorporated into the optical deflector (see: US8730549B2).

In the above-described prior art video projection apparatus, however, since the sensor is susceptible to the fluctuation of a DC offset generated in the sense voltage thereof, it is difficult to accurately control the vertical deflection of the mirror. Also, if a circuit is added to exclude the above-mentioned fluctuation of a DC offset, the manufacturing cost would be increased. As a result, if the apparatus is a video projection apparatus, it is difficult to accurately control a projected view field.

Note that the fluctuation of a DC offset would be caused by the fluctuation of the piezoelectric coefficient of the piezoelectric sensor due to the fluctuation of environmental factors such as temperature and humidity and due to the fluctuation of hardness and rigidity of a substrate by the heating of the piezoelectric sensor irradiated by light. Also, the fluctuation of a DC offset would be caused by charges stored in the piezoelectric sensor when it is operated for a long time.

SUMMARY

The presently disclosed subject matter seeks to solve the above-described problem.

According to the presently disclosed subject matter, in an apparatus including an optical deflector and a control unit for controlling the optical deflector, wherein the optical deflector includes a mirror; a piezoelectric actuator adapted to rock the mirror around an axis of the mirror; and a piezoelectric sensor adapted to sense vibrations of the piezoelectric actuator, the control unit includes: a saw-tooth voltage generating block adapted to generate a saw-tooth voltage; an integral block adapted to calculate an integral voltage of a sum of a sense voltage of the piezoelectric sensor and a DC offset characteristic voltage; a DC offset characteristic voltage calculating block adapted to calculate the DC offset characteristic voltage in accordance with the integral voltage; a subtracter block, connected to the saw tooth voltage generating block and the integral block and adapted to generate a deviation between the saw-tooth voltage and the integral voltage; and a controller, connected to the subtracter block and adapted to generate a drive voltage in accordance with the deviation to apply the drive voltage to the piezoelectric actuator.

Also, in a method for controlling an optical deflector including: a mirror; a piezoelectric actuator adapted to rock the mirror around an axis of the mirror; and a piezoelectric sensor adapted to sense vibrations of the piezoelectric actuator, the method includes: generating a saw-tooth voltage; calculating an integral voltage of a sum of a sense voltage of the piezoelectric sensor and a DC offset characteristic voltage; calculating the DC offset characteristic voltage in accordance with the integral voltage; generating a deviation between the saw-tooth voltage and the integral voltage; and generating a drive voltage in accordance with the deviation to apply the drive voltage to the piezoelectric actuator.

According to the presently disclosed subject matter, since the integral voltage includes the sense voltage and the DC offset characteristic voltage that represents a DC offset voltage generated in the piezoelectric sensor, the DC offset voltage can be compensated for by the integral voltage, so that the deflection of the mirror can accurately be controlled.

BRIEF DESCRIPTION OF THE DRAWINGS

The above and other advantages and features of the presently disclosed subject matter will be more apparent from the following description of certain embodiments, taken in conjunction with the accompanying drawings, wherein:

Fig. 1 is a block circuit diagram illustrating an embodiment of the apparatus according to the presently disclosed subject matter;
Fig. 2 is a perspective view of the MEMS optical deflector of Fig. 1;
Figs. 3A and 3B are perspective views for explaining the operation of the outer piezoelectric actuator of Fig. 2;
Figs. 4A, 4B and 4C are timing diagrams for explaining the horizontal scanning operation of the MEMS optical deflector of Fig. 1;
Figs. 5A, 5B and 5C are timing diagrams for explaining the vertical scanning operation of the MEMS optical deflector of Fig. 1;
Fig. 6 is a diagram showing the relationship between a scanning locus of the MEMS optical deflector and a projected view field of the laser beam of the laser light source of Fig. 1;
Fig. 7 is a functional block diagram of the drive voltage generating section and the drive voltage processing section for the vertical scanning operation of the MEMS optical deflector of Fig. 1;
Fig. 8 is a flowchart of software carrying out the same operation as the operation of the adder and the PID controller of Fig. 7;
Fig. 9 is a flowchart of software carrying out the same operation as the operation of the integral block and the DC offset characteristic voltage calculating block of Fig. 7;
Fig. 10 is a table for storing the minimum points of the integral voltage of the same voltage of Fig. 9;
Figs. 11A, 11B and 11C are timing diagrams for explaining examples of the DC offset characteristic voltage of Figs. 7 and 9; and
Fig. 12 is a timing diagram illustrating a relationship among the sense voltage, the integral voltage of the sense voltage, and the vertical drive voltage of Fig. 1.

DETAILED DESCRIPTION OF EXEMPLARY EMBODIMENTS

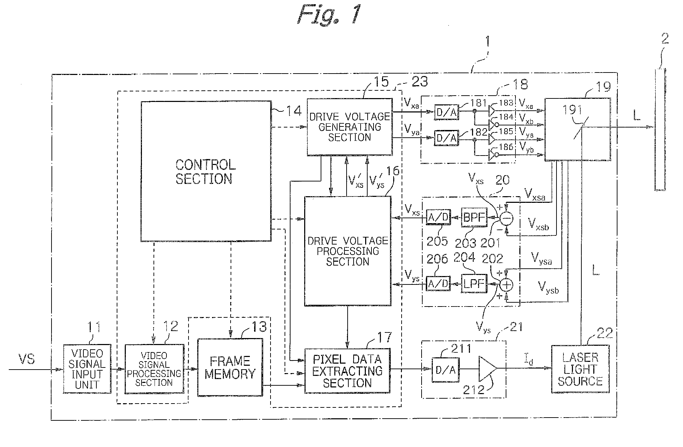

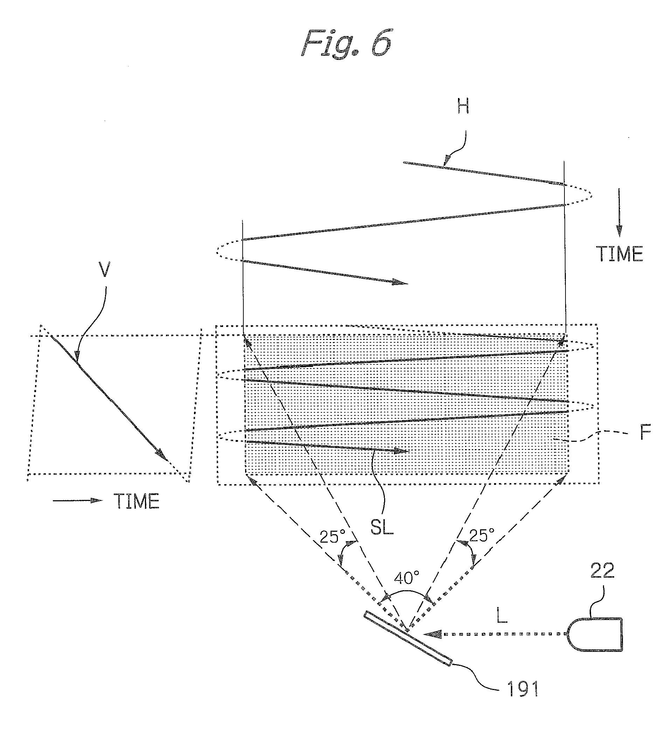

In Fig. 1, which illustrates an embodiment of the apparatus according to the presently disclosed subject matter, a video projection apparatus 1 receives a video signal VS from a video source such as a personal computer or a camera system to generate a laser beam L for a screen 2.
The video projection apparatus 1 is constructed by a video signal input unit 11, a video signal processing section 12, a frame memory 13 and a control section 14 for controlling the video signal processing section 12 and the frame memory 13.
The video signal input unit 11 is an analog red/green/blue (RGB) receiver or a digital video signal receiver such as a digital video interface (DVI), or a high-definition multimedia interface (HDMI). Video signals received by the video signal input unit 11 are processed by a video signal processing section 12 and are stored in the frame memory 13 frame by frame. For example, 60 frames per second are stored in the frame memory 13. The frame memory 13 is formed by a high-speed random access memory (RAM) such as an SDRAM, a DDR2 SDRAM or a DDR3 SDRAM. In this case, one frame of the frame memory 13 corresponds to a view field formed by a horizontal angle of 40° and a vertical angle of 25° (see: Fig. 6).
Also, the video projection apparatus 1 is constructed by a drive voltage generating section 15, a drive voltage processing section 16, and a pixel data extracting section 17.
The drive voltage generating section 15 generates digital drive voltages $V_{xa}$ and $V_{ya}$ which are transmitted via a drive unit 18 formed by digital-to-analog (D/A) converters 181 and 182, amplifiers 183 and 184, and inverters 185 and 186 to a MEMS optical deflector 19. In this case, analog drive voltages $V_{xa}$ and $V_{ya}$ and their inverted drive voltages $V_{xb}$ and $V_{yb}$ are supplied from the drive unit 18 to the MEMS optical deflector 19. Note that the analog drive voltages $V_{ya}$ and $V_{yb}$ are represented by the same denotations of the digital drive voltages $V_{ya}$ and $V_{yb}$, in order to simplify the description. On the other hand, the MEMS optical deflector 19 generates sense voltages $U_{xsa}$, $V_{xsb}$, $V_{ysa}$ and $V_{ysb}$ in response to the flexing angles of the mirror thereof which are supplied via a sense voltage input unit 20 formed by a subtracter 201, an adder 202, a band-pass filter 203, a low-pass filter 204, and analog-to-digital (A/D) converters 205 and 206 to the drive voltage processing section 16. In this case, the band-pass filter 203 removes external noises from the sense voltage $V_{xs}$ (=$V_{xsa}$-$Vy_{sb}$) of the subtracter 201, while the low-pass filter 204 removes external noises from the sense voltage $V_{ys}$ (=$V_{ysa}$+$V_{ysb}$) of the adder 202. The A/D converter 205 performs an A/D conversion upon the output voltage of the band-pass filter 203 to transmit a digital sense voltage $V_{xs}$ to the drive voltage processing section 16, while the A/D converter 206 performs an A/D conversion upon the output voltage of the low-pass filter 204 to transmit a digital sense voltage $V_{ys}$ to the drive voltage processing section 16. Note that the digital sense voltages $V_{ys}$ and $V_{ys}$ are represented by the same denotations of the analog output voltages $V_{ys}$ and $V_{ys}$ of the subtracter 201 and the adder 202, in order to simplify the description.
The pixel data extracting section 17 generates a drive voltage which is supplied to a light source drive unit 21 formed by a D/A converter 211 and an amplifier 212 for supplying a drive current $I_d$ to a laser light source 22. Note that the light source drive unit 21 and the laser light source 22 can be provided for each of red (R), green (G) and blue (B). Also, the laser light source 22 can be replaced by a light emitting diode (LED) source.
The drive voltage generating section 15, the drive voltage processing section 16 and the pixel data extracting section 17 are controlled by the control section 14.

In more detail, the drive voltage generating section 15 transmits extracting timing signals of pixel data to the pixel data extracting section 17. Also, the drive voltage processing section 16 receives drive voltages similar to the drive voltages $V_{xa}$ and $V_{ya}$ from the drive voltage generating section 15 and the sense voltages $V_{xs}$ and $V_{ys}$ from the sense voltage input unit 20 to transmit a delay timing signal to the pixel data extracting section 17 due to the delay transmission of the drive voltages $V_{xa}$ and $V_{ya}$ to the mirror of the MEMS optical deflector 19. Further, the pixel data extracting section 17 extracts pixel data from the frame memory 13 in accordance with the extracting timing signals of the drive voltage generating section 15 and the delay signal of the drive voltage processing section 16.

In Fig. 1, the video signal processing section 12, the control section 14, the drive voltage generating section 15, the drive voltage processing section 16 and the pixel data extracting section 17 can be formed by a single control unit 23 or a microcomputer using a field-programmable gate array (FPGA), an extensible processing platform (EPP) or a system-on-a-chip (SoC). The control section 14 has an interface function with a universal asynchronous receiver transmitter (UART) and the like.

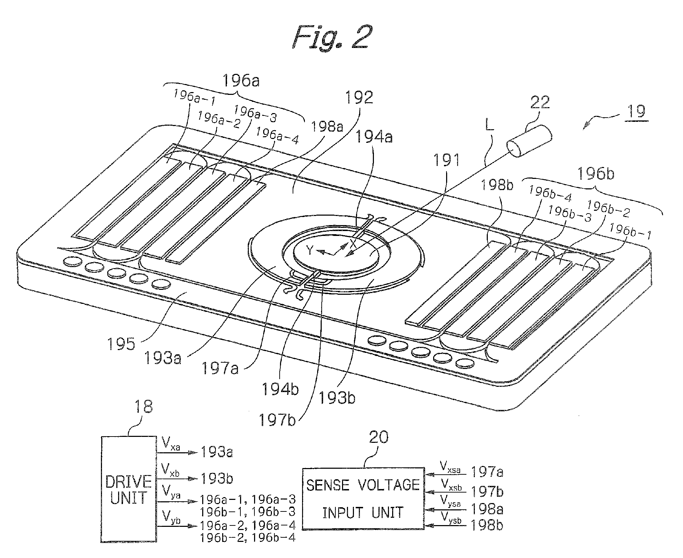

In Fig. 2, which is a perspective view of the MEMS optical deflector 19 of Fig. 1, the MEMS optical deflector 19 is constructed by a circular mirror 191 for reflecting incident light L from the laser light source 22, an inner frame (movable frame) 192 surrounding the mirror 191 for supporting the mirror 191, a pair of torsion bars 194a and 194b coupled between the mirror 191 and the inner frame 192, a pair of inner piezoelectric actuators 193a and 193b coupled between the inner frame 192 and the mirror 191 and serving as cantilevers for rocking the mirror 191 with respect to an X-axis of the mirror 191, an outer frame (support frame) 195 surrounding the inner frame 192, a pair of meander-type outer piezoelectric actuators 196a and 196b coupled between the outer frame 195 and the inner frame 192 and serving as cantilevers for rocking the mirror 191 through the inner frame 192 with respect to a Y-axis of the mirror 191 perpendicular to the X-axis, piezoelectric sensors 197a and 197b arranged symmetrically with respect to the X-axis in the proximity of the inner piezoelectric sensors 193a and 193b at an edge of the torsion bar 194b, and piezoelectric sensors 198a and 198b arranged on the inner frame 192 in the proximity of the outer piezoelectric actuators 196a and 196b.

The inner frame 192 is rectangularly-framed to surround the mirror 191 associated with the inner piezoelectric actuators 193a and 193b.

The torsion bars 194a and 194b are arranged along the X-axis, and have ends coupled to the inner circumference of the inner frame 192 and other ends coupled to the outer circumference of the mirror 191. Therefore, the torsion bars 194a and 194b are twisted by the inner piezoelectric actuators 193a and 193b to rock the mirror 191 with respect to the X-axis.

The inner piezoelectric actuators 193a and 193b oppose each other along the Y-axis and sandwich the torsion bars 194a and 194b. The inner piezoelectric actuators 193a and 193b have ends coupled to the inner circumference of the inner frame 192 and other ends coupled to the torsion bars 194a and 194b. In this case, the flexing direction of the inner piezoelectric actuator 193a is opposite to that of the inner piezoelectric actuator 193b.

The outer frame 195 is rectangularly-framed to surround the inner frame 192 via the outer piezoelectric actuators 196a and 196b.

The outer piezoelectric actuators 196a and 196b are coupled between the inner circumference of the outer frame 195 and the outer circumference of the inner frame 192, in order to rock the inner frame 192 associated with the mirror 191 with respect to the outer frame 195, i.e., to rock the mirror 191 with respect to the Y-axis.

The outer piezoelectric actuator 196a is constructed by piezoelectric cantilevers 196a-1, 196a-2, 196a-3 and 196a-4 which are serially-coupled from the outer frame 195 to the inner frame 192. Also, each of the piezoelectric cantilevers 196a-1, 196a-2, 196a-3 and 196a-4 are in parallel with the X-axis of the mirror 191. Therefore, the piezoelectric cantilevers 196a-1, 196a-2, 196a-3 and 196a-4 are folded at every cantilever or meandering from the outer frame 195 to the inner frame 192, so that the amplitudes of the piezoelectric cantilevers 196a-1, 196a-2, 196a-3 and 196a-4 can be changed along directions perpendicular to the Y-axis of the mirror 191.

Similarly, the outer piezoelectric actuator 196b is constructed by piezoelectric cantilevers 196b-1, 196b-2, 196b-3 and 196b-4 which are serially-coupled from the outer frame 195 to the inner frame 192. Also, each of the piezoelectric cantilevers 196b-1, 196b-2, 196b-3 and 196b-4 are in parallel with the X-axis of the mirror 191. Therefore, the piezoelectric cantilevers 196b-1, 196b-2, 196b-3 and 196b-4 are folded at every cantilever or meandering from the outer frame 195 to the inner frame 192, so that the amplitudes of the piezoelectric cantilevers 196b-1, 196b-2, 196b-3 and 196b-4 can be changed along directions perpendicular to the Y-axis of the mirror 191.

Note that the number of piezoelectric cantilevers in the outer piezoelectric actuator 196a and the number of piezoelectric cantilevers in the outer piezoelectric actuator 196b can be other values such as 2, 6, 8, ⋯.

The piezoelectric sensors 197a and 197b serve as speed sensors that sense deflecting angle deviations of the mirror 191 mainly caused by the inner piezoelectric actuators 193a and 193b. The sense voltages $V_{xsa}$ and $V_{xsb}$ of the piezoelectric sensors 197a and 197b are substantially the same as each other, and opposite in phase to each other. These two sense voltages $V_{xsa}$ and $V_{xsb}$

correspond to differentiated signals of the drive voltages $V_{xa}$ and $V_{xb}$. Also, the difference voltage $V_{xs}$ (see: Fig. 1) between the two sense voltages $V_{xsa}$ and $V_{xsb}$ would cancel noises included therein. Therefore, the sense voltage $V_{xs}$ (=$V_{xsa}$ - $V_{xsb}$) of the subtracter 201 of the sense voltage input unit 20 of Fig. 1 is a representative sense deflecting angle signal caused the inner piezoelectric actuators 193a and 193b. Note that one of the piezoelectric sensors 197a and 197b can be omitted.

The piezoelectric sensors 198a and 198b serve as speed sensors that sense deflecting angle signals of the mirror 191 mainly caused by the outer piezoelectric actuators 196a and 196b. Note that the sense voltages $V_{ysa}$ and $V_{ysb}$ of the piezoelectric sensors 198a and 198b are substantially the same as each other. These sense voltages $V_{ysa}$ and $V_{ysb}$ correspond to a differentiated voltage of the drive voltage $V_{ya}$. Therefore, the sense voltage $V_{ys}$ (=$V_{ysa}$ - $V_{ysb}$) of the adder 202 of the sense voltage input unit 20 of Fig. 1 is a representative sense deflecting angle signal caused the outer piezoelectric actuators 196a and 196b. Note that one of the piezoelectric sensors 198a and 198b can be omitted.

The structure of each element of the MEMS optical deflector 19 is explained below.

The mirror 191 is constructed by a monocrystalline silicon support layer serving as a vibration plate and a metal layer serving as a reflector.

The inner frame 192, the torsion bars 194a and 194b and the outer frame 195 are constructed by the monocrystalline silicon support layer and the like.

Each of the piezoelectric actuators 194a and 194b and the piezoelectric cantilevers 196a-1 to 196a-4 and 196b-1 to 196b-4 and the piezoelectric sensors 197a, 197b, 198a and 198b is constructed by a Pt lower electrode layer, a lead titanate zirconate (PZT) layer and a Pt upper electrode layer.

The meander-type piezoelectric actuators 196a and 196b are described below.

In the piezoelectric actuators 196a and 196b, the piezoelectric cantilevers 196a-1, 196a-2, 196a-3, 196a-4, 196b-1 196b-2, 196b-3 and 196b-4 are divided into an odd-numbered group of the piezoelectric cantilevers 196a-1 and 196a-3; 196b-1 and 196b-3, and an even-numbered group of the piezoelectric cantilevers 196a-2 and 196a-4; 196b-2 and 196b-4 alternating with the odd-numbered group of the piezoelectric cantilevers 196a-1 and 196a-3; 196b-1 and 196b-3.

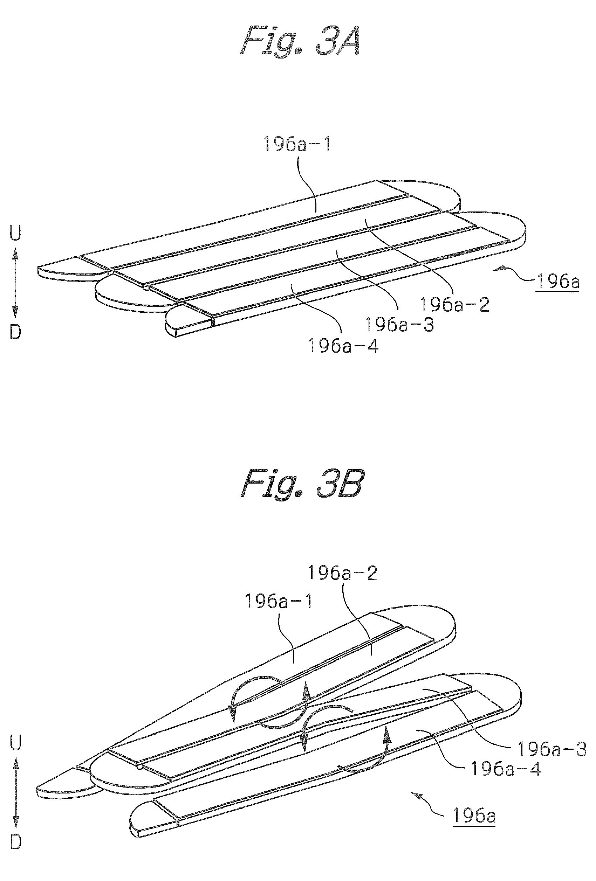

Figs. 3A and 3B are perspective views for explaining the operation of the piezoelectric cantilevers of one outer piezoelectric actuator such as 196a of Fig. 2. Note that Fig. 3A illustrates a non-operation state of the piezoelectric cantilevers 196a-1, 196a-2, 196a-3 and 196a-4 of the piezoelectric actuator 196a, and Fig. 3B illustrates an operation state of the piezoelectric cantilevers 196a-1, 196a-2, 196a-3 and 196a-4 of the outer piezoelectric actuator 196a.

As illustrated in Fig. 3B which illustrates only the piezoelectric cantilevers 196a-1, 196a-2, 196a-3 and 196a-4, when the odd-numbered group of the piezoelectric cantilevers 196a-1, 196a-3, 196b-1 and 196b-3 are flexed in one direction, for example, in a downward direction D, the even-numbered group of the piezoelectric cantilevers 196a-2, 196a-4, 196b-2 and 196b-4 are flexed in the other direction, i.e., in an upward direction U. On the other hand, when the odd-numbered group of the piezoelectric cantilevers 196a-1, 196a-3, 196b-1 and 196b-3 are flexed in the upward direction, the even-numbered group of the piezoelectric cantilevers 196a-2, 196a-4, 196b-2 and 196b-4 are flexed in the downward direction D.

Thus, the mirror 191 is rocked with respect to the Y-axis.

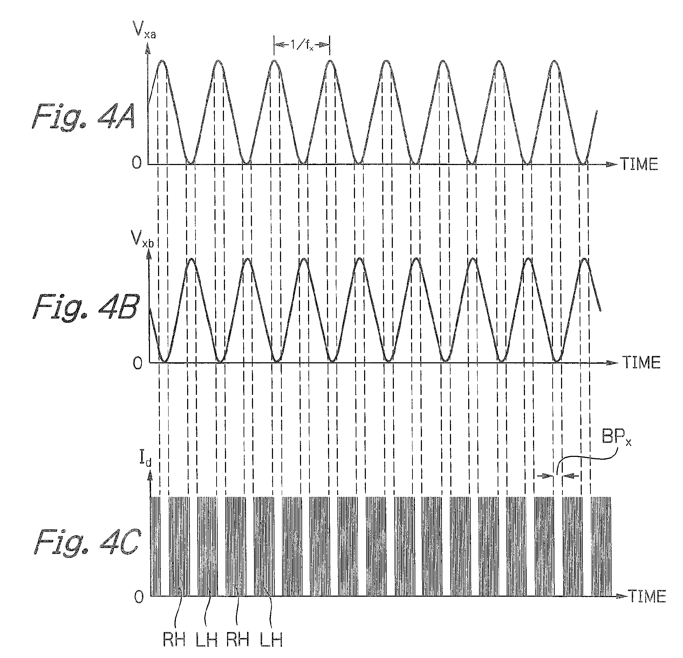

First, a main scanning operation or horizontal scanning operation by rocking the mirror 191 with respect to the X-axis is explained in detail with reference to Figs. 4A, 4B and 4C.

As illustrated in Figs. 4A and 4B, the drive voltage $V_{xa}$ and the drive voltage $U_{xv}$ generated from the drive unit 18 are sinusoidal at a relatively high resonant frequency $f_x$ and symmetrical or opposite in phase to each other. As a result, the inner piezoelectric actuators 193a and 193b carry out flexing operations in opposite directions to each other, so that the torsion bars 194a and 194b are twisted to rock the mirror 191 with respect to the X-axis.

In the above-mentioned horizontal scanning operation, the changing rates of the drive voltages $V_{xa}$ and $V_{xb}$ are low at their lowest and highest levels as illustrated in Figs. 4A and 4B, so that the brightness thereof at the screen 2 would be particularly high. Therefore, as illustrated in Fig. 4C, horizontal blanking periods $BP_x$ for turning off the laser light source 22 are provided where the changing rates of the drive voltages $V_{xa}$ and $V_{xb}$ are low to make the brightness at the entire screen 2 uniform. Additionally, right-direction horizontal scanning periods RH alternating with left-direction horizontal scanning periods LH are provided between the horizontal blanking periods $BP_x$, in order to increase the depicting time period, and thus the depicting efficiency can be enhanced.

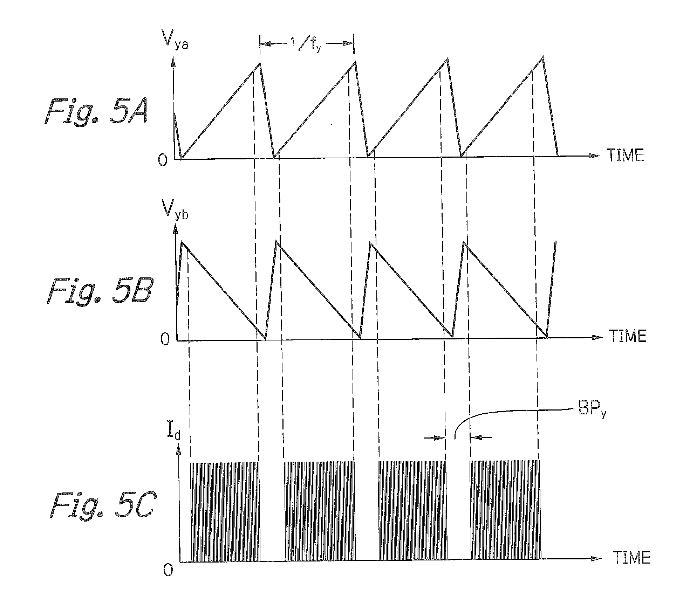

Next, a sub scanning operation or vertical scanning operation by rocking the mirror 191 with respect to the Y-axis is explained in detail with reference to Figs. 5A, 5B and 5C.

As illustrated in Figs. 5A and 5B, the drive voltage $V_{ya}$ and the drive voltage $V_{yb}$ are saw-tooth-shaped at a relatively low non-resonant frequency $f_Y$ and symmetrical or opposite in phase to each other. As a result, the piezoelectric cantilevers 196a-1, 196a-3, 196b-1 and 196b-3 and the piezoelectric cantilevers 196a-2, 196a-4, 196b-2 and 196b-4 carry out flexing operations in opposite directions to each other, so that the mirror 191 is rocked with respect to the Y-axis.

In the above-mentioned vertical scanning operation, the changing rate of the drive voltages $V_{ya}$ and $V_{yb}$ are low at their lowest and highest levels as illustrated in Figs. 5A and 5B, so that the brightness thereof at the screen 2 would be particularly high. Therefore, as illustrated in Fig. 5C, vertical blanking periods $BP_Y$ for turning off the laser light source 22 are provided where the changing rates of the drive voltages $V_{ya}$ and $V_{yb}$ are low to make the brightness at the entire screen 2 uniform.

As illustrated in Fig. 6, which is a diagram illustrating a relationship between a scanning locus SL of the MEMS optical deflector 19 and a projected area of the laser beam L of the laser light source 22 of Fig. 1, a horizontal scanning line H and a vertical scanning line V by the MEMS optical deflector 19 are protruded from a projected view field F of the laser beam L defined by a horizontal angle of 40° , for example, and a vertical angle of 25° , for example.

In the horizontal scanning operation, the drive voltage generating section 15 includes a sinusoidal-wave voltage generating block (not shown) for generating a sinusoidal-wave voltage $V_{ya}$ and a phase-locked loop block (not shown) for transmitting the sinusoidal-wave voltage $V_{ya}$ to the drive unit 18. When the drive voltage processing section 16 receives the sense voltage $V_{xs}$ from the sense voltage input unit 20, to calculate an integral voltage $V_{xs}$' of the sense voltage $V_{xs}$, the integral voltage $V_{xs}$' is transmitted to the drive voltage generating section 15, so that the phase-locked loop block generates the sinusoidal-wave voltage $V_{xa}$ phase-locked to the integral voltage $V_{xs}$'.

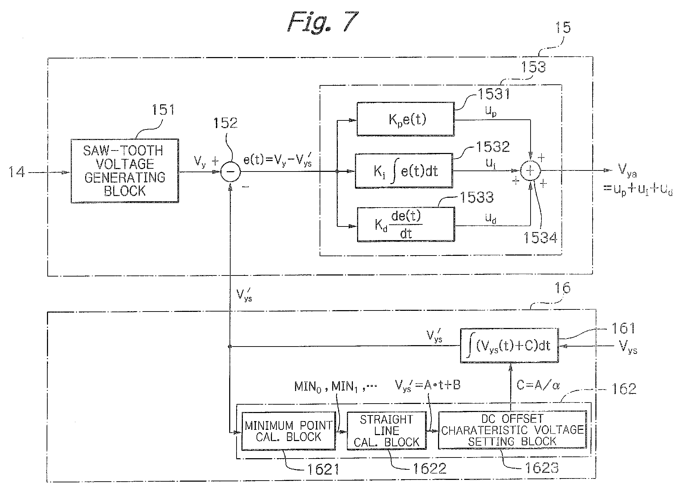

The vertical scanning operation is explained in more detail with reference to Fig. 7, which is a functional block circuit diagram of the drive voltage generating section 15 and the drive voltage processing section 16 of Fig. 1.

In Fig. 7, the drive voltage generating section 15 is constructed by a saw-tooth voltage generating block 151 operated by the control section 14, a subtracter block 152, and a proportional/integral/derivative (PID) controller 153 formed by a proportional block 1531, an integral block 1532, a derivative block 1583, and an adder block 1534. On the other hand, the drive voltage processing section 16 is constructed by a sum (or integral) block 161 and a DC offset characteristic voltage calculating block 162 for calculating a DC offset characteristic voltage C used in the integral block 161.

In the drive voltage generating section 15 of Fig. 7, the subtracter 152 calculates a deviation e(t) by

$$ e\left(t\right)\ =\ V_y\ -\ V_{ys}{}' $$

where $V_y$ is a saw-tooth voltage generated from the saw-tooth voltage generating block 151; and $V_{ys}$' is the output voltage (sum voltage or integral voltage) of the integral block 161 of the drive voltage processing section 16. The PID controller 153 is operated to generate the drive voltage $V_{ya}$ so that the deviation e (t) is brought close to zero, i. e. , the integral voltage $V_{ys}$' of the integral block 161 of the drive voltage processing section 16 is brought close to the saw-tooth voltage $V_y$. In more detail, the proportional block 1531 calculates a proportional term $u_p = K_p e(t)$, the integral block 1532 calculates an integral term $u_i = K_i \int e(t)\ dt$, the derivative block 1533 calculates a derivative term $u_d = K_d d(e(t))/dt$, and the adder block 1534 calculates a vertical drive voltage $V_{ya} = u_n + u_i + u_d$. In this case, a proportion gain $K_p$, an integral gain $K_i$ and a derivative gain $K_d$ are predetermined to have optimum values.

Note that the PID controller 153 can be another controller which includes only the proportional block 1531 and the integral block 1532, for example.

In the drive voltage processing section 16, the integral block 161 calculates an integral voltage $V_{ys}$' of the sense voltage $V_{ys}$ by

$$ V_{ys}{}'= \int\ \left(V_{ys}\left(t\right)+C\right)\mathrm{d}t $$

where C is a DC offset characteristic voltage representing a DC offset of the sense voltage $V_{ys}$ ($=V_{ysa}+V_{ysb}$) from the piezoelectric sensors 198a and 198b deviated with respect to an optimum value.

The DC offset characteristic voltage C is calculated by the DC offset characteristic voltage calculating block 162 using a gradient of the integral voltage $V_{ys}$' with respect to time. Note that the DC offset characteristic voltage C is initialized at 0.

The inventor has found that the gradient of the integral voltage $V_{ys}$' represents a DC offset voltage generated in the sense voltage $V_{ys}$ ($=V_{ysa}+V_{ysb}$) of the piezoelectric sensors 198a and 198b.

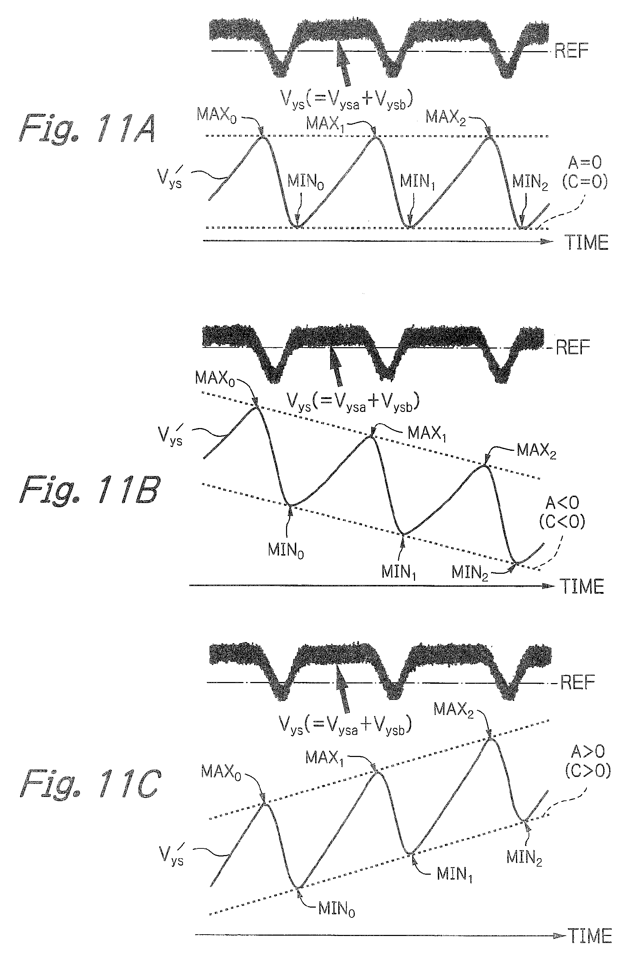

The DC offset characteristic voltage calculating block 162 is constructed by a minimum point calculating block 1621 for calculating minimum points $MIN_0$, $MIN_1$, $MIN_2$, ⋯ on the integral voltage $V_{ys}$'. For example, such minimum points $MIN_0$, $MIN_1$, $MIN_2$, ⋯, can be detected by differentiating the integral voltage $V_{ys}$' with respect to time, that is, rising points as minimum points can be detected in the differentiated integral voltage $V_{ys}$'. As a result, minimum points $MIN_0$, $MIN_1$, $MIN_2$, ⋯ are obtained (see: Figs. 11A, 11B and 11C). Also, the DC offset characteristic voltage calculating block 162 is constructed by a straight line calculating block 163 which calculates a straight line designated by $V_{ys}$'$=A·t+B$ approximate to the minimum points $MIN_0$, $MIN_1$, $MIN_2$, ⋯ using the least square method. Note that A is a gradient of the straight line with respect to time. Further, the DC offset characteristic voltage calculating block 162 is constructed by a DC offset characteristic voltage setting block 1623 which sets the DC offset characteristic voltage C by

$$ C\ =\ A/\alpha $$

where $\alpha$ is a constant larger than 1. In this case, if the constant $\alpha$ is too small, i.e., $\alpha = 1$, the compensation rate of the DC offset voltage is too large, so that the integral voltage $V_{ys}'$ could be chattering. On the contrary, if the constant $\alpha$ is too large, the compensation rate of the DC offset voltage is too small. Preferably, the constant $\alpha$ is 2.

In Fig. 7, the minimum point calculating block 1621 can be replaced by a maximum point calculating block which calculates maximum points $MAX_0$, $MAX_1$, $MAX_2$, (see Figs. 11A, 11B and 11C). The maximum points $MAX_0$, $MAX_1$, $MAX_1$, $\cdots$ have a gradient tendency the same as that of the minimum points $MIN_0$, $MIN_1$, $MIN_2$, $\cdots$. Therefore, in this case, the straight line calculating block 1622 can calculate the same straight line using the maximum points $MAX_0$, $MAX_1$, $MAX_2$, $\cdots$.

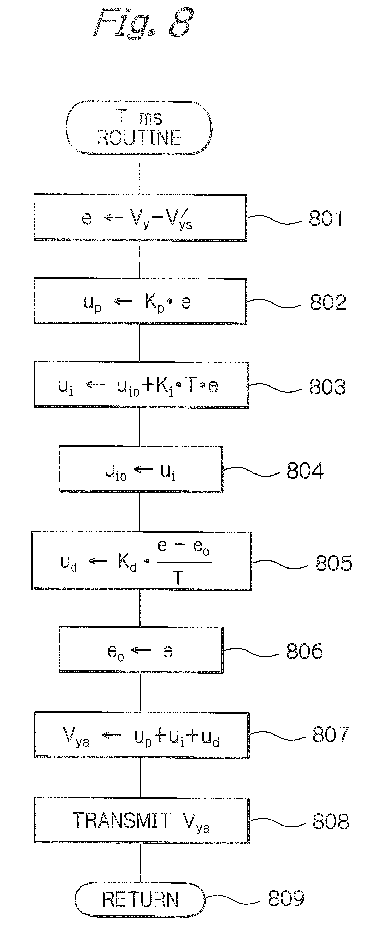

The operation of the adder 152 and the PID controller 153 of Fig.7 can be carried out by software illustrated by a flowchart in Fig. 8 executed at every time period T ms such as 1ms.

First, at step 801, a deviation "e" is calculated by

$$ e \;\leftarrow\; V_y \;-\; V_{ys}' $$

where $V_y$ is a saw-tooth voltage generated from the saw-tooth voltage generating block 151; and
$V_{ys}'$ is an integral voltage of the integral block 161 of the drive voltage processing section 16.

Next, at step 802, a proportional term $u_p$ is calculated by

$$ u_p \;\leftarrow\; K_p \cdot e $$

where $K_p$ is a proportional gain.

Next, at step 803, an integral term $u_i$ is calculated by

$$ u_i \;\leftarrow\; u_{io} \;+\; K_i \cdot T \cdot e $$

where $u_{io}$ is a previous integral term; and $K_i$ is an integral gain.

Then, the previous integral term $u_{io}$ is replaced by the current integral term $u_i$ at step 804.

Next, at step 805, a derivative term $u_d$ is calculated by

$$ u_d \;\leftarrow\; K_d \cdot (e - e_0)/T $$

where $K_d$ is a derivative gain; and
$e_0$ is a previous deviation.

Then, the previous deviation $e_0$ is replaced by the current deviation "e" at step 806.

Next, at step 807, a vertical drive voltage $V_{ya}$ is calculated by

$$ V_{ya} \;\leftarrow\; u_p \;+\; u_i \;+\; u_d $$

Next, at step 808, the vertical drive voltage $V_{ya}$ is transmitted to the drive unit 18.

The flowchart of Fig. 8 is completed by step 809.

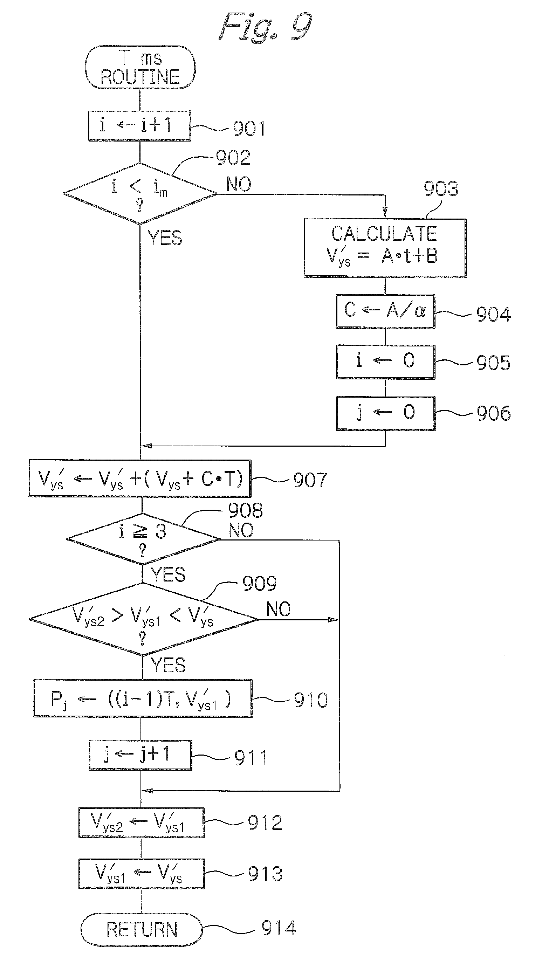

The operation of the integral block 161 and the DC offset characteristic voltage calculating block 162 of Fig. 7 can be carried out by software illustrated by a flowchart in Fig. 9 executed at every time period T ms such as 1 ms. Note that a DC offset characteristic voltage C is initialized at 0. Also, counters "i" and "j" are initialized at 0.

First, at step 901, the counter "i" is counted up by +1.

Next, at step 902, it is determined whether or not $i < i_m$ is satisfied. Note that $i_m$ is 500 corresponding to 500 ms, for example. As a result, if $i \geqq i_m$, the control proceeds to steps 903 through 906 which calculate the DC offset characteristic voltage C, while if $i < i_m$, the control proceeds directly to step 907.

Steps 903 through 906 are explained later.

At step 907, the integral voltage $V_{ys}'$ is renewed by

$$ V_{ys}' \;\leftarrow\; V_{ys}' \;+\; (V_{ys} + C \cdot T) $$

Next, at step 908, it is determined whether or not $i \geqq 3$ is satisfied. As a result, if $i \geqq 3$, the control proceeds to step 909. Otherwise, i.e., if $i < 3$, the control proceeds directly to step 912.

At step 909, it is determined whether or not the following formula is satisfied:

$$ V_{ys2}' \;>\; V_{ys1}' \;<\; V_{ys}' $$

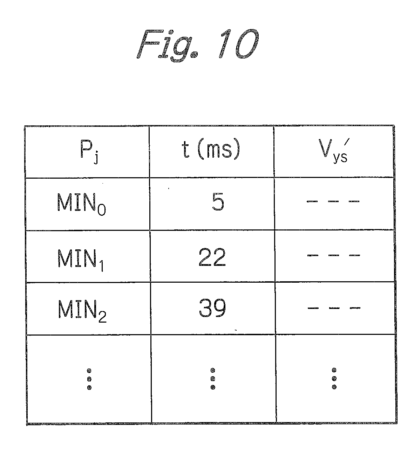

where $V_{ys1}'$ is a previous voltage of the integral voltage $V_{ys}'$; and
$V_{ys2}'$ is a second-previous voltage of the integral voltage $V_{ys}'$. That is, it is determined whether or not the previous sampling point $((i-1)T, V_{ys1}')$ is a minimum point of the integral voltage $V_{ys}'$. As a result, if $((i-1)T, V_{ys1}')$ is a minimum point $P_j$, the control proceeds to step 910. Otherwise, the control proceeds directly to step 912. At step 910, $P_j = ((i-1)T, V_{ys1}')$ is stored in a minimum point table as illustrated in Fig. 10. Then, the counter j is counted up by +1 at step 911.

Steps 903 to 906 are explained below.

At step 903, a straight line represented by $V_{ys}'=A. t+B$ approximate to the minimum points $P_j$ stored in the minimum point table is obtained by a least square method. Note that A is a gradient of the straight line with respect to time.

Next, at step 904, a DC offset characteristic voltage C is calculated by

$$C \leftarrow A/\alpha$$

where $\alpha$; is a constant larger than 1, preferably, 2.

Then, the counter "i" is initialized at 0 by step 905, and the counter "j" is initialized at 0 by step 906.

Also, at step 912, the second-previous integral voltage $V_{ys2}'$ is replaced by the previous integral voltage $V_{ys1}'$, and at step 913, the previous integral voltage $V_{ys1}'$ is replaced by the current integral voltage $V_{ys}'$.

Thus, the flowchart of Fig. 9 is completed by step 914.

Note that, at step 909, it can be determined whether or not the following formula is satisfied:

$$V_{ys2}' < V_{ys1}' > V_{ys}'$$

That is, it can be determined whether or not the previous sampling point $((i-1)T, V_{ys1}')$ is a maximum point of the integral voltage $V_{ys}'$. As a result, if $((i-1)T, V_{ys1}')$ is a maximum point $P_j$, the control proceeds to step 910 which stores $P_j=((i-1)T, V_{ys1}')$ in a maximum point table similar to the minimum point table of Fig. 10.

As illustrated in Fig. 11A, when the sense voltage $V_{ys}$ ($=V_{ysa}+V_{ysb}$) has no DC offset voltage relative to a reference level REF, the mean value of the integral voltage $V_{ys}'$ is unchanged. As a result, a straight line approximate to the minimum points $MIN_0$, $MIN_1$, $MIN_2$, $\cdots$ (the maximum points $MAX_0$, $MAX_1$, $MAX_2$, $\cdots$) is horizontal. Therefore, the DC offset characteristic voltage C is approximately 0.

Also, as illustrated in Fig. 11B, when the sense voltage $V_{ys}$ ($=V_{ysa}+V_{ysb}$) has a positive DC offset voltage relative to the reference level REF, the mean value of the integral voltage $V_{ys}'$ is changing downward. As a result, a straight line approximate to the minimum points $MIN_0$, $MIN_1$, $MIN_2$, $\cdots$ (the maximum points $MAX_0$, $MAX_1$, $MAX_2$, $\cdots$) is sloped downward. Therefore, the DC offset characteristic voltage C is negative.

Further, as illustrated in Fig. 11C, when the sense voltage $V_{ys}$ ($=V_{ysa}+V_{ysb}$) has a negative DC offset voltage relative to the reference level REF, the mean value of the integral voltage $V_{ys}'$ is changing upward. As a result, a straight line approximate to the minimum points $MIN_2$, $MIN_1$, $MIN_2$, $\cdots$ (the maximum points $MAX_0$ $MAX_1$, $MAX_1$, $\cdots$) is sloped upward. Therefore, the DC offset characteristic voltage C is positive.

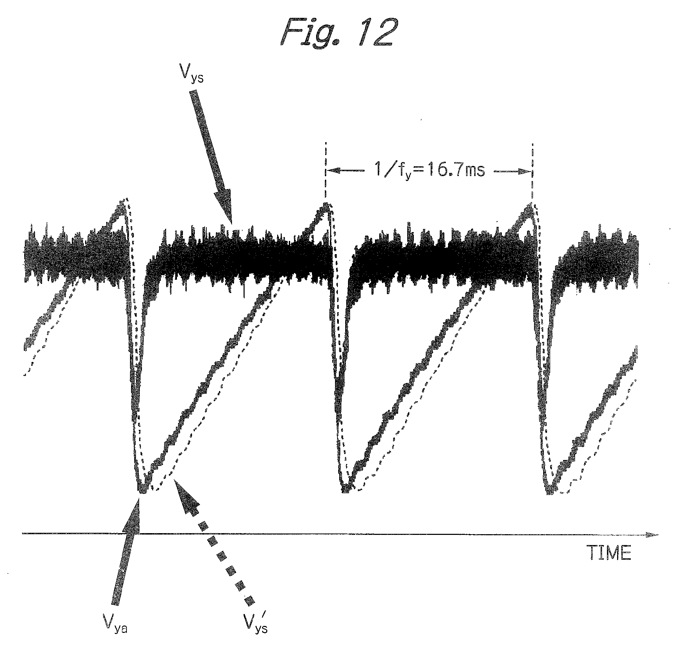

According to the inventor's experiment, the analog sense voltage $V_{ys}$ ($=V_{ysa}+V_{ysb}$) of the adder 202, the integral voltage $V_{ys}'$ of the integral block 161 and the vertical drive voltage $V_{ya}$ illustrated in Fig. 12 were obtained under the condition that the mirror 191 has a diameter of 1.2 mm and a thickness of 45 $\mu$ m. That is, in Fig. 12, the integral voltage $V_{ys}'$ could completely follow the vertical drive voltage $V_{ya}$. As a result, even when a DC offset voltage was generated in the piezoelectric sensors 198a and 198b, the deflection of the mirror 191 could accurately be controlled.

In Fig. 2, note that the inner piezoelectric actuators 193a and 193b and the torsion bars 194a and 194b can be replaced by meander-type piezoelectric actuators.

It will be apparent to those skilled in the art that various modifications and variations can be made in the presently disclosed subject matter without departing from the spirit or scope of the presently disclosed subject matter. Thus, it is intended that the presently disclosed subject matter covers the modifications and variations of the presently disclosed subject matter provided they come within the scope of the appended claims and their equivalents. All related or prior art references described above and in the Background section of the present specification are hereby incorporated in their entirety by reference.

**Claims**

1. An apparatus including an optical deflector (19) and a control unit (23) for controlling said optical deflector (19), wherein said optical deflector (19) comprises:

   a mirror (191);
   a piezoelectric actuator (196a, 196b) adapted to rock said mirror (191) around an axis of said mirror (191); and
   a piezoelectric sensor (198a, 198b) adapted to sense vibrations of said piezoelectric actuator (196a, 196b),
   wherein said control unit (23) comprises:

      a saw-tooth voltage generating block (151) adapted to generate a saw-tooth voltage ($V_y$);
      an integral block (161) adapted to calculate an integral voltage ($V_{ys}'$) of a sum of a sense voltage ($V_{ys}$) of said piezoelectric sensor (198a, 198b) and a DC offset characteristic voltage (C);
      a DC offset characteristic voltage calculating block (162) adapted to calculate said DC offset characteristic voltage (C) in accordance with said integral voltage ($V_{ys}'$);
      a subtracter block (152), connected to said saw tooth voltage generating block and said integral block (161) and adapted to generate a deviation (e(t)) between said saw-tooth voltage ($V_y$) and said integral voltage ($V_{ys}$'); and

a controller (153), connected to said subtracter block (152) and adapted to generate a drive voltage ($V_{ya}$) in accordance with said deviation (e(t)) to apply said drive voltage ($V_{ya}$) to said piezoelectric actuator (196a, 196b).

2. The apparatus set forth in claim 1, wherein said DC offset characteristic voltage calculating block (162) comprises:

a minimum point calculating block (1621) adapted to calculate minimum points ($MIN_0$, $MIN_1$, $MIN_2$, ···) of said integral voltage ($V_{ys}$');
a straight line calculating block (1622), connected to said minimum point calculating block (1621) and adapted to calculate a straight line approximate to said minimum points ($MIN_0$, $MIN_1$, $MIN_2$, ··· ); and
a DC offset characteristic voltage setting block (1623) connected to said straight line calculating block (1622) and adapted to set said DC offset characteristic voltage (C) in accordance with a gradient (A) of said straight line with respect to time.

3. The apparatus as set forth in claim 2, wherein said DC offset characteristic voltage setting block (1623) sets said DC offset characteristic voltage C by

$$C \; = \; A / \alpha$$

where A is the gradient of said straight line with respect to time; and
$\alpha$ is a constant larger than 1.

4. The apparatus set forth in claim 1, wherein said DC offset characteristic voltage calculating block (162) comprises:

a maximum point calculating block adapted to calculate maximum points ($MAX_0$, $MAX_1$, $MAX_1$, ··· of said integral voltage ($V_{ys}$');
a straight line calculating block, connected to said maximum point calculating block and adapted to calculate a straight line approximate to said maximum points ($MAX_0$, $MAX_1$, $MAX_1$, ···); and
a DC offset characteristic voltage setting block (1623) connected to said straight line calculating block (1622) and adapted to set said DC offset characteristic voltage (C) in accordance with a gradient (A) of said straight line with respect to time.

5. The apparatus as set forth in claim 4, wherein said DC offset characteristic voltage setting block (1623) sets said DC offset characteristic voltage C by

$$C \; = \; A / \alpha$$

where A is the gradient of said straight line with respect to time; and
$\alpha$ is a constant larger than 1.

6. The apparatus set forth in claim 1, wherein said controller (153) comprises a proportional/integral/derivative (PID) controller (153).

7. The apparatus as set forth in claim 1, further comprising a light source (22), said control unit controlling said light source (22) to reflect light from said light source (22) to project a view field.

8. A method for controlling an optical deflector (19) including: a mirror (191); a piezoelectric actuator (196a, 196b) adapted to rock said mirror (191) around an axis of said mirror (191); and a piezoelectric sensor (198a, 198b) adapted to sense vibrations of said piezoelectric actuator (196a, 196b), said method comprising:

generating a saw-tooth voltage ($V_y$);
calculating an integral voltage ($V_{ys}$') of a sum of a sense voltage ($V_{ys}$) of said piezoelectric sensor (198a, 198b) and a DC offset characteristic voltage (C);
calculating said DC offset characteristic voltage (C) in accordance with said integral voltage ($V_{ys}$');
generating a deviation (e(t)) between said saw-tooth voltage ($V_y$) and said integral voltage ($V_{ys}$'); and
generating a drive voltage ($V_{ya}$) in accordance with said deviation (e(t)) to apply said drive voltage ($V_{ya}$) to said piezoelectric actuator (196a, 196b).

9. The method set forth in claim 8, wherein said DC offset characteristic voltage calculating comprising:

calculating minimum points ($MIN_0$, $MIN_1$, $MIN_2$, ···) of said integral voltage ($V_{ys}$');
calculating a straight line approximate to said minimum points ($MIN_0$, $MIN_1$, $MIN_2$, ···); and
setting said DC offset characteristic voltage (C) in accordance with a gradient (A) of said straight line with respect to time.

10. The method as set forth in claim 9, wherein said DC offset characteristic voltage setting sets said DC offset characteristic voltage C by

$$C = A/\alpha$$

where A is the gradient of said straight line with respect to time; and
$\alpha$ is a constant larger than 1.

11. The method set forth in claim 8, wherein said DC offset characteristic voltage calculating comprises:

calculating maximum points ($MAX_0$, $MAX_1$, $MAX_2$, ⋯) of said integral voltage ($V_{ys}'$);
calculating a straight line approximate to said maximum points ($MAX_0$, $MAX_1$, $MAX_2$, ⋯); and
setting said DC offset characteristic voltage (C) in accordance with a gradient (A) of said straight line with respect to time.

12. The method as set forth in claim 11, wherein said DC offset characteristic voltage setting sets said DC offset characteristic voltage C by

$$C = A/\alpha$$

where A is the gradient of said straight line with respect to time; and
$\alpha$ is a constant larger than 1.

13. The method set forth in claim 8, wherein said controlling comprises proportional/integral/derivative (PID) controlling.

14. The method as set forth in claim 8, further controlling a light source (22) to reflect light from said light source (22) to project a view field.

*Fig. 1*

# Fig. 2

*Fig. 3A*

*Fig. 3B*

Fig. 4A

$V_{xa}$

$\leftarrow 1/f_x \rightarrow$

0                                                TIME

Fig. 4B

$V_{xb}$

0                                                TIME

Fig. 4C

$I_d$

$BP_x$

0                                                TIME

RH LH RH LH

Fig. 5A

$V_{ya}$

$\leftarrow 1/f_y \rightarrow$

0                                                    TIME

Fig. 5B

$V_{yb}$

0                                                    TIME

Fig. 5C

$I_d$

$BP_y$

0                                                    TIME

Fig. 6

## Fig. 7

*Fig. 8*

$$\boxed{\begin{array}{c} T \text{ ms} \\ ROUTINE \end{array}}$$

$$\boxed{e \leftarrow V_y - V'_{ys}} \quad 801$$

$$\boxed{u_p \leftarrow K_p \cdot e} \quad 802$$

$$\boxed{u_i \leftarrow u_{io} + K_i \cdot T \cdot e} \quad 803$$

$$\boxed{u_{io} \leftarrow u_i} \quad 804$$

$$\boxed{u_d \leftarrow K_d \cdot \dfrac{e - e_o}{T}} \quad 805$$

$$\boxed{e_o \leftarrow e} \quad 806$$

$$\boxed{V_{ya} \leftarrow u_p + u_i + u_d} \quad 807$$

$$\boxed{\text{TRANSMIT } V_{ya}} \quad 808$$

$$\boxed{\text{RETURN}} \quad 809$$

*Fig. 9*

```
        ┌──────────────┐
        │  T ms        │
        │  ROUTINE     │
        └──────┬───────┘
        ┌──────┴───────┐
        │  i ← i+1     │──── 901
        └──────┬───────┘
             902
        ◇ i < i_m ?───── NO ──────────┐
        ◇                             │
        │ YES                  ┌──────┴───────┐
        │                      │  CALCULATE   │──── 903
        │                      │  V'_ys = A·t+B│
        │                      └──────┬───────┘
        │                      ┌──────┴───────┐
        │                      │  C ← A/α     │──── 904
        │                      └──────┬───────┘
        │                      ┌──────┴───────┐
        │                      │  i ← 0       │──── 905
        │                      └──────┬───────┘
        │                      ┌──────┴───────┐
        │                      │  j ← 0       │──── 906
        │                      └──────┬───────┘
        │◄────────────────────────────┘
    ┌───┴─────────────────────────┐
    │ V'_ys ← V'_ys +( V_ys+ C·T) │──── 907
    └───┬─────────────────────────┘
       908
    ◇ i ≧ 3 ?───── NO ───────────────┐
    ◇                                │
    │ YES                            │
   909                               │
    ◇ V'_ys2 > V'_ys1 < V'_ys ?── NO ─┤
    ◇                                │
    │ YES                            │
    ┌──┴──────────────────────┐      │
    │ P_j ← ((i-1)T, V'_ys1 )  │─ 910 │
    └──┬──────────────────────┘      │
    ┌──┴──────────┐                  │
    │  j ← j+1    │──── 911          │
    └──┬──────────┘                  │
    │◄────────────────────────────────┘
    ┌──┴──────────┐
    │ V'_ys2 ← V'_ys1 │──── 912
    └──┬──────────┘
    ┌──┴──────────┐
    │ V'_ys1 ← V'_ys │──── 913
    └──┬──────────┘
    ┌──┴──────────┐
    │   RETURN    │──── 914
    └─────────────┘
```

$i \leftarrow i+1$ — 901

$i < i_m$ ? — 902

CALCULATE $V'_{ys} = A \cdot t + B$ — 903

$C \leftarrow A/\alpha$ — 904

$i \leftarrow 0$ — 905

$j \leftarrow 0$ — 906

$V'_{ys} \leftarrow V'_{ys} + (V_{ys} + C \cdot T)$ — 907

$i \geqq 3$ ? — 908

$V'_{ys2} > V'_{ys1} < V'_{ys}$ ? — 909

$P_j \leftarrow ((i-1)T, V'_{ys1})$ — 910

$j \leftarrow j+1$ — 911

$V'_{ys2} \leftarrow V'_{ys1}$ — 912

$V'_{ys1} \leftarrow V'_{ys}$ — 913

RETURN — 914

# Fig. 10

| $P_j$ | t (ms) | $V_{ys}'$ |
|-------|--------|-----------|
| $MIN_0$ | 5 | – – – |
| $MIN_1$ | 22 | – – – |
| $MIN_2$ | 39 | – – – |
| ⋮ | ⋮ | ⋮ |

Fig. 11A

Fig. 11B

Fig. 11C

## Fig. 12

Europäisches
Patentamt

European
Patent Office

Office européen
des brevets

# EUROPEAN SEARCH REPORT

Application Number

EP 16 15 5111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/258432 A1 (AIMONO TAKANORI [JP] ET AL) 3 October 2013 (2013-10-03) * paragraphs [0077], [0079], [0083]; figure 3 * | 1-14 | INV. G02B26/08 G09G3/00 |
| A | US 2010/073748 A1 (HOLMES STEVE [US] ET AL) 25 March 2010 (2010-03-25) * paragraphs [0021] - [0027], [0037] - [0058]; figures 2,7,8 * | 1-14 | |
| A | US 2012/242191 A1 (AIMONO TAKANORI [JP]) 27 September 2012 (2012-09-27) * paragraphs [0013], [0086] - [0087]; figures 7,10 * | 1-14 | |
| A | US 2012/224239 A1 (AIMONO TAKANORI [JP]) 6 September 2012 (2012-09-06) * paragraphs [0013], [0077] - [0087]; figures 7,11 * | 1-14 | |
| A | EP 1 719 012 A2 (MICROVISION INC [US]) 8 November 2006 (2006-11-08) * paragraphs [0028], [0073]; figure 7B * | 1-14 | TECHNICAL FIELDS SEARCHED (IPC) G02B G09G |

The present search report has been drawn up for all claims

| Place of search | Date of completion of the search | Examiner |
|---|---|---|
| Berlin | 2 June 2016 | Verdrager, Véronique |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 15 5111

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2016

| Patent document cited in search report | | Publication date | Patent family member(s) | | Publication date |
|---|---|---|---|---|---|
| US 2013258432 | A1 | 03-10-2013 | EP | 2645148 A1 | 02-10-2013 |
| | | | JP | 2013205818 A | 07-10-2013 |
| | | | US | 2013258432 A1 | 03-10-2013 |
| US 2010073748 | A1 | 25-03-2010 | CN | 102159982 A | 17-08-2011 |
| | | | CN | 103149685 A | 12-06-2013 |
| | | | EP | 2329308 A2 | 08-06-2011 |
| | | | JP | 5543468 B2 | 09-07-2014 |
| | | | JP | 2012503220 A | 02-02-2012 |
| | | | KR | 20110059640 A | 02-06-2011 |
| | | | US | 2010073748 A1 | 25-03-2010 |
| | | | WO | 2010033342 A2 | 25-03-2010 |
| US 2012242191 | A1 | 27-09-2012 | CN | 102692704 A | 26-09-2012 |
| | | | EP | 2503375 A2 | 26-09-2012 |
| | | | JP | 5659056 B2 | 28-01-2015 |
| | | | JP | 2012198415 A | 18-10-2012 |
| | | | US | 2012242191 A1 | 27-09-2012 |
| US 2012224239 | A1 | 06-09-2012 | CN | 102654642 A | 05-09-2012 |
| | | | EP | 2495601 A1 | 05-09-2012 |
| | | | JP | 5670227 B2 | 18-02-2015 |
| | | | JP | 2012185314 A | 27-09-2012 |
| | | | US | 2012224239 A1 | 06-09-2012 |
| EP 1719012 | A2 | 08-11-2006 | AT | 551293 T | 15-04-2012 |
| | | | EP | 1719010 A2 | 08-11-2006 |
| | | | EP | 1719011 A2 | 08-11-2006 |
| | | | EP | 1719012 A2 | 08-11-2006 |
| | | | EP | 1719154 A2 | 08-11-2006 |
| | | | JP | 2007522528 A | 09-08-2007 |
| | | | JP | 2007522529 A | 09-08-2007 |
| | | | JP | 2007525025 A | 30-08-2007 |
| | | | JP | 2007527551 A | 27-09-2007 |
| | | | KR | 20070012364 A | 25-01-2007 |
| | | | KR | 20070012649 A | 26-01-2007 |
| | | | KR | 20070012650 A | 26-01-2007 |
| | | | KR | 20070012651 A | 26-01-2007 |
| | | | US | 2005173770 A1 | 11-08-2005 |
| | | | US | 2005179976 A1 | 18-08-2005 |
| | | | US | 2005280879 A1 | 22-12-2005 |
| | | | WO | 2005078506 A2 | 25-08-2005 |
| | | | WO | 2005078508 A2 | 25-08-2005 |
| | | | WO | 2005078509 A2 | 25-08-2005 |
| | | | WO | 2005078772 A2 | 25-08-2005 |

EPO FORM P0459

For more details about this annex : see Official Journal of the European Patent Office, No. 12/82

**EP 3 056 936 A1**

**Patent documents cited in the description**

- JP 2015025221 A
- JP 5543468 B
- US 20100073748 A1
- US 8730549 B2